# EUROPÄISCHE PATENTSCHRIFT

(11) **EP 3 522 477 B1**
(45) Veröffentlichungstag und Bekanntmachung des Hinweises auf die Patenterteilung: **11.08.2021**
(21) Anmeldenummer: 18154319.0
(22) Anmeldetag: 31.01.2018
(51) Int. Cl.: G05B 19/418, H04L 29/06, H04L 29/08

(54) **VERFAHREN ZUR DATEN-KOMMUNIKATION IN EINEM INSBESONDERE INDUSTRIELLEN NETZWERK, VORRICHTUNG ZUR DURCHFÜHRUNG DES VERFAHRENS, COMPUTERPROGRAMM SOWIE COMPUTERLESBARES MEDIUM**
METHOD FOR COMMUNICATING DATA IN AN INDUSTRIAL NETWORK IN PARTICULAR, DEVICE FOR CARRYING OUT THE METHOD, COMPUTER PROGRAM AND COMPUTER-READABLE MEDIUM
PROCÉDÉ DE COMMUNICATION DE DONNÉES DANS UN DISPOSITIF DE RÉSEAU À BASE D'ETHERNET, EN PARTICULIER INDUSTRIEL, DESTINÉ À LA MISE EN UVRE DUDIT PROCÉDÉ, PROGRAMME INFORMATIQUE AINSI QUE SUPPORT LISIBLE PAR ORDINATEUR

(43) Veröffentlichungstag der Anmeldung: 07.08.2019
(73) Patentinhaber: Siemens Aktiengesellschaft, 80333 München (DE)
(72) Erfinder: Götz, Franz-Josef, 91180 Heideck (DE); Kießling, Marcel, 91235 Velden (DE); Schmitt, Jürgen, 90766 Fürth (DE)

(56) Entgegenhaltungen:
- MARCEL KIESSLING ET AL: "Resource Allocation Protocol (RAP) based on 802.1CS Link-local Registration Protocol", IEEE DRAFT; NEW-KIESSLING-RAP-POPOSAL-AND-FEATURES-051 7-V01, IEEE-SA, PISCATAWAY, NJ USA , Bd. 802, Nr. v01 18. Mai 2017 (2017-05-18), Seiten 1-8, XP068113914, Gefunden im Internet: URL:grouper.ieee.org/groups/802/1/files/pu blic/docs2017/new-kiessling-RAP-poposal-an d-features-0517-v01.pdf [gefunden am 2017-05-18]

## Beschreibung

Verfahren zur Daten-Kommunikation in einem insbesondere industriellen Netzwerk, Vorrichtung zur Durchführung des Verfahrens, Computerprogramm sowie computerlesbares Medium Die Erfindung betrifft ein Verfahren zur Daten-Kommunikation in einem industriellen Netzwerk wie in Anspruch 1 beschrieben. Darüber hinaus betrifft die Erfindung eine Vorrichtung zur Durchführung des Verfahrens wie in Anspruch 12 beschrieben. Schließlich betrifft die Erfindung ein Computerprogramm und ein computerlesbares Medium wie in den Ansprüchen 14 und 15 beschrieben.

Verteilte industrielle Steuerungsanwendungen erfordern eine garantierte Quality of Service (QoS) oder Dienstgüte in dem Kommunikationsnetzwerk, welches die Endgeräte miteinander verbindet, damit zeitsensitive Aufgaben neben nicht-Echtzeitrelevantem Datenverkehr (traffic) von dem Netzwerk ausgeführt werden können. Bei den Endgeräten kann es sich beispielsweise um speicherprogrammierbare Steuerungen (SPS, englisch: Programmable Logic Controller, PLC) IO-Geräte oder Schutzeinrichtung handeln.

Jede Verbindung für jede Anwendung in dem Netzwerk, die zeitsensitiven Datenverkehr zwischen Endgeräten ermöglicht, muss registriert und reserviert werden, um von dem Netzwerk Garantien für einen verlustfreien Echt-Zeit-Transfer von Datenframes und eine pünktliche Lieferung zu erhalten. Das Netzwerk muss dafür die Verfügbarkeit von Netzwerkressourcen (beispielsweise Adresstabelleneinträge Framebuffer, transmit time slices) verifizieren und Ressourcen - sofern verfügbar - zuweisen, dies für jeden Echtzeit-Datenfluss, und es muss Zugang für Echtzeit-Datenverkehr gewähren.

Innerhalb des Netzwerkes muss die Kontrollinformation über Registrierungen, Reservierungen und Weiterleite-Informationen für jeden Echtzeit-Datenfluss gespeichert werden. Der Status von jeder Reservierung muss aufrechterhalten werden. Mit einer zunehmenden Anzahl von Endgeräten und ihrem Echtzeit-Datenverkehr in demselben Netzwerk wächst die Menge von Netzwerkkontrollinformationen an. Da die Speicher- und Verarbeitungsleistung von Netzwerkknotenpunkten, beispielsweise Brigdes bzw. Switches, begrenzt ist, stellt dies ein gravierendes Skalierungsproblem dar. Insbesondere für den Fall, dass ein Kontenpunkt und ein Endgerät in einem einzelnen Produkt kombiniert sind, beispielsweise in einem IO-Modul mit zwei geswitchten Ports zur Verwendung in Linien-/Ring-Topologien, wie sie in heutigen Ethernet Fabrikhallenlösungen gefunden werden, ist dies problematisch.

Die IEEE802.1 TSN Arbeitsgruppe definiert Erweiterungen des Ethernet Standards IEEE802.1/.3 für ein konvergierendes zeitsensitives Netzwerk (Time Sensitive Network, TSN). Basierend auf vorangegangener Arbeit der Audio-Video-Bridging (AVB) Arbeitsgruppe wird der Quality of Service für Echtzeit-Datenflüsse, was die garantierte Latenz angeht weiter verbessert. Der Status für jeden Echtzeit-Datenfluss muss dabei jedoch weiterhin im Netzwerk aufrecht erhalten werden.

"Multiple Listeners per Stream" wurde in AVB eingeführt, um die Anzahl von Echtzeit-Datenflüssen (IEEE802 nennt dies "Stream") von einer Quelle (Talker) zu mehreren Zielen (Listener) zu reduzieren. Dass Daten von einer Quelle an mehrere Ziele zu übertragen sind ist der typische AV (Audio Video) Anwendungsfall, konkret für die Verteilung von Audiodaten von einer einzelnen Quelle an mehrere Lautsprecher. Es ist bekannt, dass dieses Reservierungsmodell von AVB/TSN "Multiple Stream Reservation Protocol" (MSRP) mehrere Listener unterstützt. Dabei kann im Anschluss an eine von der Quelle abgehenden "Talker Advertise"-Nachricht für eine Stream mehrere "Listener join"-Reservierungen durchgeführt werden, was in einen einzelnen Streamkontroll-Informationseintrag resultiert. Die Weiterleitung von dem einen Talker zu seinen Listenern geht entlang eines einzelnen Baumes, dessen Wurzel (root) der Talker darstellt, wobei dann nur ein einzelner Weiterleite-Eintrag für alle Stream-Listener in den Netzwercknotenpunkten erforderlich ist. Ein einzelner Ethernet-Frame wird von dem einen Talker über das Netzwerk an die mehreren Listener verteilt.

Im dem Feature Proposal "Resource Allocation Protocol (RAP) based on 802.1CS Link-local Registration Protocol" von Marcel Kiessling und Franz-Josef Götz von der Siemens AG, welches auf dem IEEE802.1 Interim Meeting im Mai 2017 in Stuttgart vorgestellt wurde, sind sowohl MSRP als auch das Stream reservation protocol (SRP) behandelt.

Dieses Modell könnte im Rahmen der industriellen Automatisierung Verwendung finden, um die Anzahl von Streams von einer den Talker darstellenden SPS zu mehreren Listener darstellenden IO-Geräten Verwendung finden. Die Daten für alle "hörenden" (listening), also empfangenden IO-Geräte können unter Verwendung eines einzelnen Streams von der SPS transferiert werden. Die Anzahl der Streams im Netzwerk und somit die Menge an Kontrollinformationen ist dann gegenüber dem Fall, dass für jedes IO-Gerät ein eigener Stream für den Empfang von Daten von der SPS eingerichtet wird, deutlich reduziert. Abhängig von der Menge an Daten der einzelnen IO-Geräte, kann der Vorteil der vereinfachten Kontrollinformation eine exzessivere Benutzung von Bandbreite des Netzwerk sein, da individuelle IO-Geräte nur einen Teil (subset) der Information des in dem via Stream übertragenen Frames benötigen.

Da ein Regelkreis (closed loop control) auch einen Rückkanal von jedem IO-Gerät zu der SPS benötigt, muss dann doch eine insgesamt hohe Anzahl von Streams in dem Netzwerk eingerichtet werden, einer von jedem IO-Gerät zu der SPS, also für die "Rückrichtung". In jedem Stream muss ein Ethernet Frame, der 64+ Oktette (octets) erfordert. gesendet werden, selbst wenn das IO-Gerät nur ein paar Bits von Eingabeinformationen für die SPS bereitstellt.

Ein Echtzeit-Datenfluss in AVB kann mehrere Frames in einer Periode haben. AVB Echtzeitflüsse sind jedoch an den Credit Based Shaper (CBS) gebunden, welcher die Frames gleichmäßig über die gesamte Periode verteilt. TSN ermöglicht die Verwendung anderer Shaper, beispielsweise Strict Priority, mit höchster Priorität für den EchtzeitDatenfluss und Bandbreitenlimitierung, um die CBS-Limitierungen für diesen Anwendungsfall zu überwinden. Ein Burst von mehreren Frames wird in einem TSN Netzwerk nicht mehr gleichmäßig über die Periode verteilt. Dadurch können alle IO Daten auch in mehreren Frames direkt hintereinander vom Netzwerk übermittelt werden, wie es für Regelkreis-Anwendungen typisch ist.

Die Aufgabe der vorliegenden Erfindung besteht darin, ein Verfahren der eingangsgenannten Art anzugeben, welches eine Datenkommunikation in einem Netzwerk mit vertretbare, Aufwand ermöglicht, insbesondere auch in einem industriellen Netzwerk, in welchem Endgeräte in einem geschlossen Regelkreis miteinander kommunizieren müssen.

Weiterhin ist es Aufgabe der vorliegenden Erfindung, eine Vorrichtung zur Durchführung eines solchen Verfahrens anzugeben.

Diese Aufgabe wird gelöst durch ein Verfahren zur Daten-Kommunikation in einem industriellen Netzwerk wie in Anspruch 1 beschrieben.

Es ist insbesondere vorgesehen, dass die Listener Advertise Nachricht im Netzwerk verbreitet wird, insbesondere an mehrere, bevorzugt alle Knotenpunkte im Netzwerk übertragen wird. Weiterhin bevorzugt wird die Listener Advertise Nachricht an mehrere Sender übertragen, wobei die Übertragung an den jeweiligen Sender bevorzugt über denjenigen Knotenpunkt oder diejenige Kontenpunkte erfolgt, der oder die auf den dem jeweiligen Sender und Empfänger verbindenden Netzwerkpfad liegt oder liegen.

Insbesondere ist vorgesehen, dass von mehreren Sendern, die jeweils über den Stream Daten an den Empfänger übermitteln wollen, in Reaktion auf den Listener Advertise des Empfängers jeweils eine Talker Join Nachricht gesendet und eine Talker Join Reservierung an den Knotenpunkten auf einem Netzwerkpfad zwischen dem jeweiligen Sender und dem Empfänger durchgeführt wird.

Die (jeweilige) Talker Join Nachricht umfasst weiterhin bevorzugt eine Stream-ID und/oder einen Reservierungsstatus. Es sei angemerkt, dass - wie vom Stand der Technik für die Stream-Einrichtung zwischen einem Sender und einem oder mehreren Empfängern vorbekannt - die Reservierung erfolgreich sein kann oder auch nicht, je nachdem, ob Netzwerkressourcen zur Verfügung stehen, insbesondere Netzwerkressourcen, welche die Anforderungen einer von dem Empfänger herausgegebenen Streambeschreibung genügen oder nicht.

Die vorliegende Erfindung schlägt mit anderen Worten vor, zur Reduzierung der Anzahl von Streams in demjenigen Falle, dass Daten von mehreren Quellen/Sendern an genau ein Ziel/Empfänger gesendet werden sollen, existierende Reservierungsmodelle zu verbessern, konkret derart, dass sie eine "Multiple Talker per Listener" Konfiguration unterstützen.

Hierzu ist erfindungsgemäß vorgesehen, dass von wenigstens einem Endgerät, welches Daten von mehreren anderen Endgeräten im Netzwerk empfangen möchte, das also den einen Empfänger darstellt, während die anderen, Daten bereitstellenden Geräte die mehreren Sender bilden, eine Listener Advertise Nachricht herausgegeben und insbesondere im Netzwerk verteilt wird. Mit der Listener Advertise Nachricht kündigt das den einen Empfänger bildende Endgerät an, dass es Daten über den einen Stream empfangen will. Die Listener Advertise Nachricht umfasst bevorzugt eine Beschreibung des Streams, über welchen dann mehrere Sender an den Empfänger Daten, insbesondere in Form von zyklisch übermittelten Frames, senden können. Die Streambeschreibung umfasst beispielsweise eine Weiterleite-Adresse und eine Bandbreiteninformation.

Um "Multiple Talker per Listener" möglich zu machen, wird mit dem "Listener Advertise" erfindungsgemäß ein neues Attribut bzw. Datenobjekt eingeführt, das im Rahmen eines Reservierungsmodelles Verwendung finden kann.

Das erfindungsgemäß neu vorgesehene Attribut bzw. Datenobjekt des "Listener Advertise" korrespondiert, wenn man einen Vergleich mit dem Stand der Technik zieht, zu dem "Talker Advertise" für den vorbekannten Fall eines Datentransfers von einem Sender/Talker an einen oder mehrere Empfänger/Listener via Stream. Der Unterscheid zum Stand der Technik besteht darin, dass der eine Empfänger, welcher Daten über einen Stream erhalten möchte, den "Advertise" herausgibt, wohingegen nach dem Stand der Technik der eine Sender advertised, also ein "Talker Advertise" von diesem herausgegeben und über die Kontenpunkte im Netzwerk an mögliche Empfänger verteilt wird. Bei der Vorgehensweise nach dem Stand der Technik erfolgt der Stream-Advertise entlang eines Netzwerkbaumes (Tree's), dessen Ursprung bzw. Wurzel (Root) der eine Sender/Talker bildet und welcher insbesondere durch die Gesamtheit der Netzwerkpfade definiert ist, über welche Daten an die mehreren Empfänger/Listener gehen.

Die Datenübertragung via Stream, insbesondere die zyklische Übertragung von Frames von dem einen Sender an die mehreren Empfänger über den einen Stream erfolgt anschließend in die gleiche Richtung, wie der Stream Advertise, also von dem Sender zu den Empfängern entlang der Netzwerkpfades des Baumes. Erfindungsgemäß hingegen erfolgt der Stream-Advertise durch den einen Empfänger und wird insbesondere an mehrere Sender verteilt. Bei dem erfindungsgenmäßen neu vorgesehenen Attribut ist die Wurzel des Netzwerkbaumes dabei der eine Listener.

Nachdem der eine Empfänger eine Listener Advertise Nachricht herausgegeben hat und diese bevorzugt über die Knotenpunkte im Netzwerk verteilt und an Daten bereitstellende Geräte, also potentielle Sender übermittelt wurde, können sich die Geräte, die Daten an diesen Empfänger übertragen möchten bzw. von denen der Sender Daten empfangen möchte, an dem Stream anmelden, und es wird eine Ressourcen-Reservierung durchgeführt. Hierfür ist in besonders bevorzugter Ausführungsform der Erfindung ein weiteres neues Attribut bzw. Datenobjekt vorgesehen, der "Talker Join" zur Reservierung der Ressourcen, welcher von dem jeweiligen Sender herausgegeben wird und die Reservierung(en) an dem oder den Knotenpunkten auf einem Netzwerkpfad zwischen dem entsprechenden Sender und dem Empfänger bewirkt.

Es sei angemerkt, dass die Information darüber, von welchen Geräten im Netzwerk der eine Empfänger Daten erhalten möchte, zuvor auf anderem Wege erhalten worden sein kann. Dies ist vergleichbar mit dem AVB Modell, bei dem die Listener eine Stream ID von der Anwendung bekommen, welche im Talker Advertise verwendet wird. Im industriellen Umfeld kann die Information zum Beispiel von der Anwendung kommen, welche das Programm der SPS und der IO Geräte erzeugt und sich z.B. durch einen Netzwerk-Service eine freie Stream ID bezieht.

Der sich an den Listener Advertise anschließende Ressourcen-Reservierungs-Vorgang erfolgt dann in zum Stand der Technik umgekehrter Richtung, beginnt konkret nicht empfänger- sondern senderseitig. Die Reservierung entlang des jeweiligen Netzwerkpfades startet insbesondere an dem dem jeweiligen Sender am nächsten liegenden Knotenpunkt und "propagiert" in Richtung des Empfängers, wohingegen nach dem Stand der Technik (Listener Join) mit der Reservierung bei dem dem jeweiligen Empfänger am nächsten liegenden Knotenpunkt begonnen und in Richtung des Senders fortgeführt wird.

Gemäß einer vorteilhaften Ausführungsform des erfindungsgemäßen Verfahrens ist vorgesehen, dass an wenigstens einem Knotenpunkt, insbesondere an mehreren Knotenpunkten ein Reservierungsstatus eines erstes Portes in Richtung eines oder mehrerer Sender und ein Reservierungsstatus eines zweiten Portes in Richtung eines oder mehrerer weiterer Sender zusammengefasst werden, und insbesondere der zusammengefasste Reservierungsstatus über einen Port in Richtung des Empfängers weitergeleitet wird.

Besonders bevorzugt ist vorgesehen, dass der dem Empfänger am nächsten liegende Knotenpunkt einen für alle Sender zusammengefassten Reservierungsstatus an den Empfänger weiterleitet, wobei insbesondere der bei dem Empfänger ankommende Reservierungsstatus die Information umfasst, dass eine Reservierung der senderseitigen Ports aller Knotenpunkte auf den die Sender und den Empfänger verbindenden Netzwerkpfaden erfolgreich war, oder dass eine Reservierung der senderseitigen Ports aller Knotenpunkte auf den die Sender und den Empfänger verbindenden Netzwerkpfaden nicht erfolgreich war, oder dass eine Reservierung wenigstens eines senderseitigen Ports wenigstens eines Knotenpunktes auf den die Sender und den Empfänger verbindenden Netzwerkpfaden nicht erfolgreich war und eine Reservierung wenigstens eines senderseitigen Ports wenigstens eines Knotenpunktes auf den die Sender und den Empfänger verbindenden Netzwerkpfaden erfolgreich war.

Es sei angemerkt, dass die Status-Merge-Funktion für Listener-Stati aus dem Stand der Technik vorbekannt ist. Dabei basiert die Reservierung, beispielsweise in einem AVB Netzwerk, auf einem einzelnen Weiterleitungsbaum, welcher mit RSTP (Rapid Spanning Tree Protocol) gebaut wird. Die Listener-Stati werden in Aufwärtsrichtung des Baumes zu dem einen Sender hin zusammengeführt (merged).

Bei den vorstehenden Ausführungsformen der vorliegenden Erfindung verhält es sich - erneut - genau umgekehrt. Die Talker-Stati werden in Aufwärtsrichtung des Baumes zu dem genau einen Empfänger zusammengeführt (merged).

Während gemäß der aus dem Stand der Technik bekannten Vorgehensweise die Reservierungs-Stati von Knotenpunkten zusammengefügt (merge) werden, die über die Empfänger- also Listener-seitigen Ports an dem jeweiligen Kontenpunkt ankommen, und für die Datenverteilung an mehrere Ziele eine Duplikation der Frames in den betreffenden Knotenpunkten stattfindet, erfolgt das Zusammenführen (merge) nicht von Listener- sondern Talker-Stati.

Auf die für die Empfänger/Listener vorbekannte Status-Merge-Funktion bekannter Protokolle kann dabei zurückgegriffen bzw. es kann auf diesen aufgebaut werden, da die eigentliche Reservierung von Ressourcen an dem bzw. den Knotenpunkten prinzipiell gleich bzw. analog zu der vorbekannten Vorgehensweise ablaufen kann.

Es kann bei dem erfindungsgemäßen Verfahren weiterhin vorgesehen sein, dass für die Reservierung von Ressourcen an einem oder mehreren Knotenpunkten wenigstens ein Reservierungsprotokoll verwendet wird. Es kann auf ein vorbekanntes, insbesondere standardisiertes Reservierungsprotokoll zurückgegriffen werden, welches dann bevorzugt um wenigstens ein, insbesondere mehrere Datenobjekte erweitert ist. Beispiele für bekannte, standardisierte Reservierungsprotokolle, die im Rahmen des erfindungsgemäßen Verfahrens in insbesondere erweiterter Form zum Einsatz kommen können, sind Stream Reservation Protocol (SRP) und/oder Multiple Stream Registration Protocol (MSRP) und/oder Ressource Reservation Protocol (RSVP) .

SRP ist die bekannte Änderung bzw. Erweiterung des IEEE802.1Q Standards, die separat als IEEE802.1Qat standardisiert wurde. Die Listener Advertise Nachricht und/oder die Talker Join Nachricht und/oder die Talker Join Reservierung stellen dann besonders bevorzugt das Reservierungsprotokoll, beispielsweise SRP und/oder MSRP und/oder RSVP, erweiternde Datenobjekte dar.

Die neuen Attribute bzw. Datenobjekte für die gemäß der vorliegenden Erfindung vorgesehenen Multiple Talker Reservierungen können insbesondere in vorhandene, standardisierte Fluss-Reservierungsprotokolle eingeführt werden, ohne dass das fundamentale Prinzip der Echtzeit-Flussreservierung geändert werden muss.

Weiterhin kann vorgesehen sein, dass insbesondere unter Verwendung des Rapid Spanning Tree Protocols der Netzwerkbaum bestimmt wird, der durch Netzwerkpfade gebildet wird, die den einen Empfänger mit denjenigen Sendern verbinden, die über den Stream Daten an den Empfänger senden wollen und von denen insbesondere jeweils eine Talker Join Nachricht gesendet wurde.

Der bestimmte, zu dem Stream zwischen den mehreren Sendern und dem einen Empfänger gehörende Netzwerkbaum, der auch als Listener-Tree bezeichnet werden kann, stellt bevorzugt ein Datenobjekt dar, welches ein für die Ressourcen-Reservierung zum Einsatz kommendes Reservierungsprotokoll, beispielsweise SRP und/oder MSRP, erweitert.

Der Listener-Tree resultiert aus dem erfindungsgemäßen Listener Advertise und umfasst insbesondere die Information über einen Listener Port je Knotenpunkt, insbesondere Bridge, und bevorzugt die vielen möglichen Talker Ports. Der von den einen Listener ausgehende Listener Advertise dient praktisch als neue logische Wurzel eines Baums für die Reservierungen.

Die sich an den Listener Advertise und die Talker Joins, insbesondere Reservierungen anschließende Datenübertragung von mehreren Sendern an den Empfänger, insbesondere in Form von zyklisch gesendeten Frames, erfolgt dann in der zum Listener Advertise entgegengesetzten Richtung nämlich von dem jeweiligen Sender zu dem einen Empfänger, also in "Reservierungsrichtung".

In weiterer vorteilhafter Ausführungsform ist vorgesehen, dass die Listener Advertise Nachricht eine Streambeschreibung umfasst, die eine Angabe des Streamtyps aufweist, wobei bevorzugt als Streamtyp ein akkumulierter Stream oder ein Multiplex-Stream angegeben ist.

Bei dem akkumulierten Streamtyp ist insbesondere vorgesehen, dass in jeder Periode ein Frame von allen an dem Stream teilnehmenden Sendern an den Empfänger übermittelt wird, wobei diese "Datenakkumulation" zu eine größeren Bandbreite führt, jedoch eine geringe Latenz ermöglicht, da alle Sender "gleichzeitig" senden können. Beim akkumulierten Stream-Typ muss jedoch eine Zwischenspeicherung von Frames in den Bridges erfolgen, da immer nur die reservierte Anzahl an Frames in jeder Periode über den Listener-seitigen Port weitergeleitet werden kann.

Gemäß dem Multiplex-Streamtyp hingegen wird in jeder Periode nur der Frame eines Senders übermittelt, das heißt, es erfolgt ein warten. Der Multiplex Streamtyp kommt mit einer geringeren Bandbreite aus, wobei es jedoch länger dauert, bis die Daten bei einem Empfänger ankommen, da nacheinander übermittelt wird. Je nachdem, wie die konkreten Anforderungen eines gegebenen Anwendungsfalles liegen, kann eine Entscheidung auf den einen oder den anderen Typ fallen.

Die vorliegende Erfindung, die erstmals "Multiple Talker for one real time flow/stream" ermöglicht, bietet eine Vielzahl von erheblichen Vorteilen. Einerseits wird die Anzahl der Echtzeitflüsse, also Streams in einem Netzwerk reduziert. Damit geht eine Reduzierung des Control Overheads für die Registrierung und Reservierung der Streams und eine Reduzierung der Anzahl von Filterdatabase-Einträgen in den Kontenpunkten einher und es wird der gleiche Overhead für beide Richtungen des Datentransfers erzielt. Weiterhin wird die Skalierbarkeit verbessert, da mehr Endgeräte, insbesondere Sensoren/Aktoren unterstützt werden können. Die erfindungsgemäße Vorgehensweise ist weiterhin von der gegebenen Netzwerktopologie unabhängig. So ist sie keineswegs auf beispielsweise eine Linientopologie beschränkt, sondern kann gleichermaßen auch bei Vorliegen anderer Netzwerktopologien, etwa einer Ring- oder Sterntopologie, zum Einsatz kommen. Weiterhin wir die Kommunikationskonfiguration durch die erfindungsgemäße Vorgehensweise vereinfacht. Auch kann das Engineering von Kontrollanwendungen vereinfacht werden, insbesondere ist eine automatische Kommunikationskonfiguration ohne Engineering möglich und die Kontrollinformation für Feldbusanwendungen kann vereinfacht werden.

Ob ein Stream zwischen einem Empfänger und mehreren Sendern im Sinne der Erfindung besteht, kann insbesondere daran ausgemacht werden, dass genau eine Stream-ID vorliegt und mehrere Sender Daten über den einen Stream mit der einen ID an den einen Empfänger übertragen. Dabei kann die gleiche Stream-Zieladresse für die Daten von mehreren Sendern verwendet werden.

Es versteht sich, dass in einem Netzwerk eine Mehrzahl von Streams, über die jeweils Daten in einer von genau einem Empfänger und zwei oder mehr Sendern gebildeten Gruppe von Kommunikationspartnern ausgetauscht werden können, also eine Mehrzahl von Streams auf die erfindungsgemäße Weise mit Listener Advertise und Talker Join(s) eingerichtet werden können.

Alternativ oder zusätzlich kann die vorstehende Aufgabe gelöst werden durch ein Verfahren zur Daten-Kommunikation in einem insbesondere industriellen Netzwerk mit einem oder mehreren Knotenpunkten, bei dem ein Stream zwischen mehreren Sendern und einem Empfänger eingerichtet wird und/oder von mehreren Sender über eine Stream Daten an einen Empfänger gesendet werden.

Ein weiterer Gegenstand der vorliegenden Erfindung ist ein Steuerungsverfahren für einen industriellen technischen Prozess oder ein Fahrzeug, bei dem zwischen wenigstens zwei Komponenten eines Steuerungssystems, insbesondere einem oder mehreren Sensoren einer industriellen Automatisierungsanlage oder eines Fahrzeuges als Sender und einem, bevorzugt genau einem Controller, insbesondere einer SPS einer industriellen Automatisierungsanlage oder eines Fahrzeuges als Empfänger, Daten unter Durchführung eines erfindungsgemäßen Verfahrens zur Daten-Kommunikation ausgetauscht werden und auf Basis der ausgetauschten Daten eine Steuerung des industriellen technischen Prozesses oder Fahrzeugs erfolgt.

Ein weiterer Gegenstand der vorliegenden Erfindung ist eine Vorrichtung umfassend
- wenigstens ein, bevorzugt mehrere Knotenpunkte, insbesondere Bridges, und/oder
- wenigstens ein, bevorzugt mehrere jeweils einen Sender bildende Endgeräte, insbesondere Sensoren, und/oder
- ein einen Empfänger bildendes Gerät, insbesondere einen Controller einer industriellen Automatisierungsanlage oder eines Fahrzeuges,
wobei die Vorrichtung zur Durchführung des erfindungsgemäßen Verfahrens zur Daten-Kommunikation bzw. des erfindungsgemäßen Steuerungsverfahrens ausgebildet und eingerichtet ist.

Die erfindungsgemäße Vorrichtung kann beispielsweise Teil eines Steuerungssystems für einen industriellen technischen Prozess darstellen, welches dann einen weiteren Gegenstand der vorliegenden Erfindung bildet.

Weiterhin betrifft die Erfindung ein Computerprogramm, das Programmcodemittel zur Durchführung der Schritte des erfindungsgemäßen Verfahrens zur Daten-Kommunikation bzw. des erfindungsgemäßen Steuerungsverfahrens umfasst, sowie ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Daten-Kommunikation bzw. des erfindungsgemäßen Steuerungsverfahrens durchzuführen. Es sei angemerkt, dass unter einem computerlesbaren Medium nicht nur ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung einer Ausführungsform des Verfahrens der vorliegenden Erfindung unter Bezugnahme auf die beiliegende Zeichnung deutlich. Darin ist
- FIG 1: eine schematische Teildarstellung eines industriellen Netzwerkes zur Veranschaulichung des Falles, dass ein Sender über einen Stream an mehrere Empfänger Daten übermittelt;
- FIG 2: eine schematische Teildarstellung eines industriellen Netzwerkes zur Veranschaulichung des Falles, dass ein Empfänger über einen Stream Daten von mehreren Sendern empfängt;
- FIG 3: eine rein schematische Darstellung einer Bridge, an welcher zwei Listener-Stati zusammengeführt werden (merge);
- FIG 4: eine rein schematische Darstellung einer Bridge, an welcher zwei Talker-Stati zusammengeführt werden (merge);
- FIG 5: eine Übersicht mit gegenüber dem Stand der Technik neuen Datenobjekten; und
- FIG 6: eine schematische Darstellung zur Veranschaulichung des akkumulierten und des Multiplex-Streams-Typs.

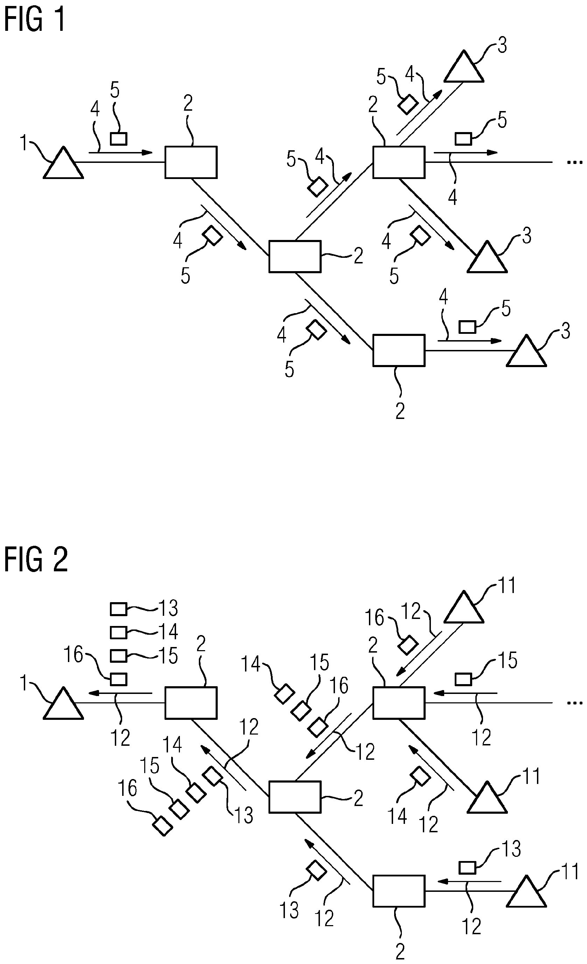

Die FIG 1 zeigt eine rein schematische Teildarstellung eines industriellen Ethernet-basierten Netzwerkes. Konkret ist ein Endgerät zu erkennen, welches einen Sender/Talker 1 darstellt, und das über mehrere Bridges 2, von denen in der FIG 1 nur vier Stück dargestellt sind, mit einer Mehrzahl von weiteren Endgeräten verbunden ist, die jeweils einen Empfänger/Listener 3 darstellen. Von den Empfängern 3 sind in der FIG 1 drei zu erkennen. Die drei Punkte rechts in der FIG sollen verdeutlichen, dass hinter der Bridge 2 oben rechts weitere Bridges 2 und Endgeräte folgen (können).

Wie man der FIG 1 entnehmen kann, zeichnet sich das Ethernet-basierte Netzwerk mit der Vielzahl von Bridges 2 bei dem dargestellten Ausführungsbeispiel durch eine Linientopologie aus. Selbstverständlich kann auch eine andere aus dem Stand der Technik bekannte Netzwerktopologie, z.B. eine Baum-, Stern- oder Ring-Topologie, vorgesehen sein.

Bei dem den Sender 1 bildenden Endgerät handelt es sich vorliegend um eine SPS einer industriellen Automatisierungsanlage und die die Empfänger 3 bildenden Endgeräte sind Aktoren der Automatisierungsanlage, welche von der der SPS zyklisch Steuersignale benötigen, um auf einen in den Figuren nicht dargestellten industriellen technischen Prozess zyklisch einzuwirken.

Die Steuersignale werden über das Ethernet-basierte Netzwerk von der SPS 1 an die Aktoren 3 übertragen. Die Kommunikation der Steuersignale von der SPS 1 an die Aktoren 3 erfolgt dabei in Form von Frames, die via Stream im Netzwerk übertragen werden. Diese Art der Datenkommunikation, die etwa von dem AVB- sowie TSN-Standard bekannt ist, stellt insbesondere sicher, dass eine vorgegebene Latenzzeit, die von Stream zu Stream variieren kann, und insbesondere von der jeweiligen Anwendung abhängt, eingehalten wird. Somit wird sichergestellt, dass die Steuersignale binnen einer vorbestimmten maximalen Latenzzeit bei den Aktoren 3 eintreffen, also zwischen dem Einspeisen der Daten in das Netzwerk seitens der SPS 1 bis zum Eingang der Daten bei den Aktoren 3 eine maximale Latenzzeit vergeht. So kann etwa eine insbesondere echt-zeit-kritische Kommunikation zwischen der SPS 1 und den Aktoren 3 sichergestellt werden.

Dabei gilt, dass ein Stream, wie er beispielsweise von der Audio/Video-Bridging (AVB) Taskgroup und insbesondere von der Time Sensitiv Networking (TSN) Taskgroup in der internationalen Norm IEE802.1 festgelegt ist, unter Rückgriff auf das zugehörige Stream-Reservierungsprotokoll (Stream Reservation Protocol - SRP) eingerichtet wird, wobei jedoch ausschließlich ein Stream zwischen einem Sender und einem Empfänger der auch ein Stream zwischen einem Sender und mehreren Empfängern erhalten werden kann. Letztere Konfiguration entspricht erkennbar derjenigen aus FIG 1.

Für die Einrichtung eines Streams zwischen der SPS 1 und den Aktoren 3 gemäß bekannten Standards erfolgt eine Reservierung mit SRP an jeder der Bridges 2, die auf dem Netzwerkpfad zwischen der SPS 1 und dem jeweiligen Aktor 3 liegen, also über welche diese verbunden sind. Dabei wird der Stream in einem ersten Schritt von der SPS 1, welche die auch als Talker bezeichnet Datenquelle darstellt, mit einem Talker Advertise angekündigt und es werden die Eigenschaften des Streams von der den Talker bildenden SPS 1 beschrieben. Von der SPS 1 werden insbesondere eine Stream-ID, eine Weiterleite-Adresse und eine Bandbreiteninformation für den von ihr abgehenden Datentransfer angegeben.

Die Ankündigung des Streams wird an alle Knotenpunkte, vorliegend also Bridges 2 im Netzwerk verteilt, wobei dann jede Bridge 2 die Information des Empfangsports, also des Ports in Richtung des Talkers 1, über den die Ankündigung eingegangen ist, und später auch die Daten eingehen werden, führt. Da gemäß dem Stand der Technik die Datenquelle auch als Talker 1 bezeichnet wird, trägt dieser Port auch die Bezeichnung Talker-Port. Die Ports in Richtung des/der Listener werden entsprechend auch als Sende- bzw. Listener-Ports bezeichnet.

An dem von der SPS 1 angebotenen Stream melden sich einer oder mehrere Listener, vorliegend die Aktoren 3 an.

An denjenigen Bridges 2, die zwischen dem Talker 1 und dem jeweiligen Listener 3 liegen wird jeweils eine Reservierung an dem Port in Richtung des Listeners, also dem Listener-Port gemäß der von dem den Talker darstellenden SPS 1 angegebenen Streambeschreibung durchgeführt, sofern die verfügbaren Ressourcen an der jeweiligen Bridge 2 ausreichen. Jeder Knotenpunkt 2 prüft, ob seine internen Ressourcen für im Rahmen des einzurichtenden Streams geforderte Performance (insbesondere bezüglich Datenmenge und Datendurchsatz) ausreichen. Ist dies der Fall, reserviert der Knotenpunkt 2 diese Ressourcen für den einzurichtenden Stream und gibt einen positiven Reservierungsstatus an die nachfolgende Bridge 2 weiter, bzw. die letzte Bridge an den Sender 1.

Über die Reservierung kann jeder Knotenpunkt 2 sicherstellen, dass er beim anschließenden Datentransfer die erforderliche Performance gewährleistet. Hierin unterscheiden sich Streams von ungeschützten Verbindungen.

Sind keine ausreichenden Ressourcen verfügbar, wird ein negativer Reservierungsstatus weitergegeben.

Die Reservierung startet dabei an der dem jeweiligen Empfänger/Listener, also Aktor 3 nächstliegenden Bridge 2 und "propagiert" entlang des jeweiligen Netzwerkpfades zur Datenquelle/zum Talker, also der SPS 1. Die Reservierung von Ressourcen in den Bridges 2 erfolgt somit in entgegengesetzter Richtung zu der Weiterleitung der Steuersignale von der SPS 1 zu den Aktoren 3, die über den Stream erfolgen wird, wenn die Reservierung an den Bridges 2 erfolgreich war. Die Richtung der späteren Datenübertragung ist in der FIG 1 mit Pfeilen 4 und darüber liegenden, die weitergeleiteten Frames rein schematisch repräsentierenden, mit 5 bezeichnete Blockbildelementen skizziert.

Die Reservierung basiert dabei auf dem auch als Talker-Tree bezeichneten Weiterleite-Baum, der mit dem Rapid Spanning Tree Protocol (RSTP) aufgebaut werden kann.

An denjenigen Bridges 2, welche Abzweigungen bilden, also die Daten über zwei Listener-seitige Ports weiterleiten müssen, findet ein "merge" der ankommenden Listener-Reservierungs-stati statt. Dies wird über die "Status merge" Funktion des verwendeten Reservierungsprotokolls realisiert.

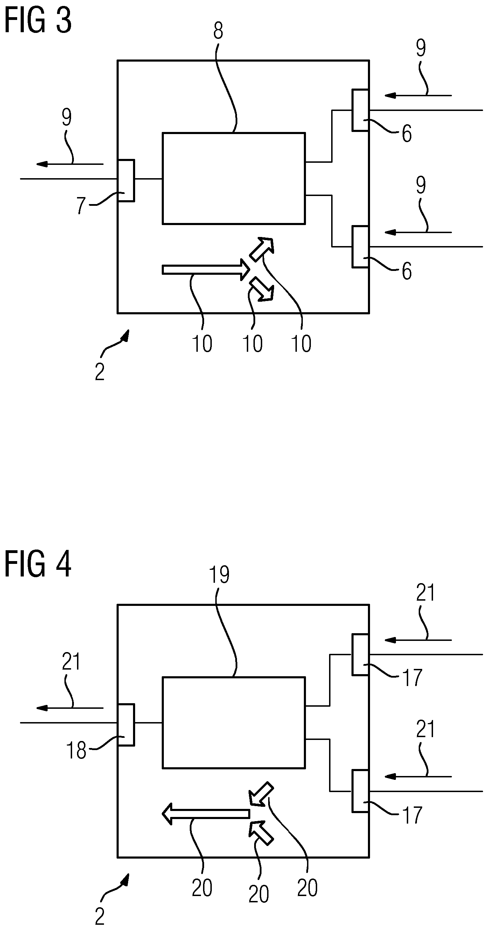

Die FIG 3 zeigt eine rein schematische Darstellung einer Bridge 2, von deren Ports zwei Listener-seitige Ports 6 und ein Talker-seitiger Port 7 zu erkennen sind.

Die rein schematisch durch ein Blockbildelement dargestellte "Listener status merge"-Funktion in Richtung des Talkers 1 ist mit 8 bezeichnet. Mit 9 bezeichnete Pfeile repräsentieren weiterhin die über die Listener-seitigen Ports 6 ankommenden und über den Talker-seitigen Port 7 ausgehenden, zusammengeführten (merged) Listener-Reservierungsstatus. Bei nur erfolgreichen Reservierungen (Listener Ready) die an den Listener-seitigen Ports 6 ankommen, wird eine erfolgreiche Reservierung (Listener Ready) an Port 7 weitergeben. Bei mindestens einer erfolgreichen Reservierung (Listener Ready) und mindestens einer fehlerhaften Reservierung (Listener Asking Failed - z.B. wegen ungenügenden Ressourcen an einer hinter Port 6 befindlichen Bridge) wird ein Listener Ready Failed als merged Status weitergegeben. Bei nur fehlerhaften Reservierungen (Listener Asking Failed) wird ein fehlerhafter Status (Listener Asking Failed) weitergegeben.

Weiterhin in der FIG 3 rein schematisch angedeutet ist die Richtung der Frame-Weiterleitung, also des Datenflusses, dies mit Pfeilen 10. Damit die von der SPS 1 bereitgestellten Frames 5 über beide Listener-seitigen Ports 6, 7 der dargestellten Bridge 2 weitergeleitet werden können, findet eine Duplikation der Frames 5 (Multicast) statt.

Für eine echtzeit-kritische Übertragung von Steuersignalen von der SPS 1 an mehrere Aktoren 3 hat sich die vorbeschriebene Weise bewährt. Mit nur einem Stream mit einer Stream-ID kann eine Mehrzahl von Listenern mit Daten versorgt werden, wodurch ein vertretbarer Netzwerkaufwand gewährleistet ist.

Neben der in FIG 1 gezeigten Situation, gemäß der Steuersignale von einem Endgerät an mehrere weitere Netzwerkteilnehmer zu verteilen sind, findet sich - insbesondere in industriellen Anwendungen - jedoch auch der umgekehrte Fall, nämlich dass von zwei oder mehr Quellen Daten an ein (gemeinsames) Ziel zu übermitteln sind. Dies ist beispielsweise der Fall, wenn in einer Automatisierungsanlage von einer Mehrzahl von Sensoren erfasste Istwerte an eine zentrale Steuerung, die wiederum durch eine SPS 1 gegeben sein kann, echtzeit-kritisch zu übermitteln sind.

Diese Situation ist in FIG 2 dargestellt, die erneut eine rein schematische Teildarstellung eines industriellen Ethernet-basierten Netzwerkes zeigt, wobei wiederum ein Endgerät durch die SPS 1 gegeben ist, die nunmehr jedoch den Empfänger/Listener darstellt, und eine Mehrzahl von Sendern/Talkern vorhanden sind, konkret mehrere Sensoren 11, von denen in FIG 2 insgesamt drei zu erkennen sind. Das industrielle Netzwerk mit den Bridges 2 und Endgeräten aus FIG 2 ist Bestandteil eines Ausführungsbeispiels einer erfindungsgemäßen Vorrichtung zur Durchführung des erfindungsgemäßen Verfahrens.

Es sei angemerkt, dass die Netzwerktopologie in den FIG 1 und 2 übereinstimmend dargestellt ist, da vorliegend die in FIG 1 erkennbaren Aktoren 3 und die in die FIG 2 erkennbaren Sensoren 11 jeweils in einem Endgerät enthalten sind, dies aber natürlich keineswegs der Fall sein muss.

Die SPS 1 und die Sensoren 11 sind entsprechend über eine Mehrzahl von Bridges 2 in - der rein optionalen - Linientopologie miteinander verbunden.

Nach dem Stand der Technik müsste für die Übertragung von mit den Sensoren 11 erfassten Istwerten an die SPS 1 für jeden Sensor 11 ein eigener Stream eingerichtet werden. Für die in der FIG 2 erkennbaren drei Sensoren 11 wären entsprechend drei separate Streams erforderlich, womit ein gegenüber der Situation gemäß FIG 1 deutlich erhöhter Netzwerk-Verwaltungs- und- Verarbeitungsaufwand verbunden wäre.

Die vorliegende Erfindung schlägt vor, zur Reduzierung der Anzahl von Streams in demjenigen Falle, dass Daten von mehreren Quellen/Sendern an genau ein Ziel/Empfänger gesendet werden sollen, eine neue Art der Reservierung durchzuführen, die eine "Multiple Talker per Listener" Konfiguration ermöglicht, so dass die drei Sender 11 über nur einen Stream mit einer Stream-ID Daten an die SPS 1 übermitteln können.

Konkret wird hierzu in einem ersten Schritt des hier beschriebenen Ausführungsbeispiels des erfindungsgemäßen Verfahrens von dem Empfänger, also der SPS 1, eine Listener Advertise Nachricht für den Stream herausgegeben, die eine Streambeschreibung umfasst, und die Listener Advertise Nachricht wird über die Bridges 2 im Netzwerk verteilt und an die Sensoren 11 übertragen. Mit der Listener Advertise Nachricht kündigt die SPS 1 im Netzwerk an, dass sie über einen Stream Daten empfangen möchte. Es sei angemerkt, dass die Information darüber, dass die Sensoren 11 Istwerte für die SPS 1 bereitstellen können, auf anderem Wege bereitgestellt wurde. Dies ist in FIG 1 nach dem Stand der Technik ebenfalls notwendig und kann z.B. im industriellen Umfeld während der Programmierung der SPS 1 und der IO Module erfolgen.

Nachdem die SPS 1 den Listener Advertise herausgegeben hat und dieser verteilt wurde, wird von jedem Sensor 11, von dem erfasste Istwerte an die SPS 1 übertragen werden sollen, eine Talker Join Nachricht herausgegeben. Bei dem dargestellten Ausführungsbeispiel senden alle drei Sensoren 11 eine Talker Join Nachricht. Für jeden der drei Sensoren 11 wird dann eine Talker Join Reservierung an den Bridges 2 auf dem Netzwerkpfad zwischen dem jeweiligen Sensor 11 und der SPS 1 durchgeführt. Die Talker Join Nachricht umfasst u.a. eine Stream ID und einen Reservierungsstatus.

Die Reservierung von Ressourcen in den Bridges 2 erfolgt dabei in Abweichung vom Stand der Technik ausgehend von dem jeweiligen Talker, also jeweiligen Sensor 11, in Richtung des einen Listeners 1, also in der gleichen Richtung wie die Weiterleitung der Istwerte von den Sensoren 11 an die SPS 1, die über den Stream erfolgen wird, wenn die Reservierung an den Bridges 2 erfolgreich war. Die Richtung der späteren Datenübertragung ist in der FIG 2 - in Analogie zu FIG 1 - mit Pfeilen 12 und darüber liegenden, die weitergeleiteten Frames rein schematisch repräsentierenden, mit 13, 14, 15, 16 bezeichneten Blockbildelementen skizziert.

An denjenigen Bridges 2, welche Abzweigungen bilden, also an denen Daten über zwei Talker-seitige Ports ankommen werden, findet ein "merge" der ankommenden Talker-Reservierungs-Stati statt. Dies wird - in Analogie zu der im Zusammenhang mit FIG 1 beschriebenen Vorgehensweise - über die "Status merge" Funktion des verwendeten Reservierungsprotokolls realisiert. Dabei kommt ein Reservierungsprotokoll zum Einsatz, welches um die neuen Datenobjekte Listener-Advertise und Talker-Join erweitert ist, und welches auf die für die Empfänger/Listener vorbekannte Listener-Status-Merge-Funktion bekannter Protokolle zurückgreift, da die eigentliche Reservierung von Ressourcen an dem bzw. den Knotenpunkten prinzipiell gleich bzw. analog zu der vorbekannten Vorgehensweise mit einem Sender/Talker und mehreren Empfängern/Listenern ablaufen kann.

Abweichend vom Stand der Technik werden die Talker-Stati dabei in Richtung, des Listener-Trees zu dem genau einen Empfänger, also der SPS 1, zusammengeführt (merged).

Auch der Listener-Tree, der sich aus dem weiteren neuen Listener Advertise Datenobjekt des verwendeten, erweiterten Reservierungsprotokolls bildet, wird vorliegend mit dem Rapid Spanning Tree Protocol bestimmt. Der Tree entsteht dabei aus dem gespeicherten Port des Listener Advertise.

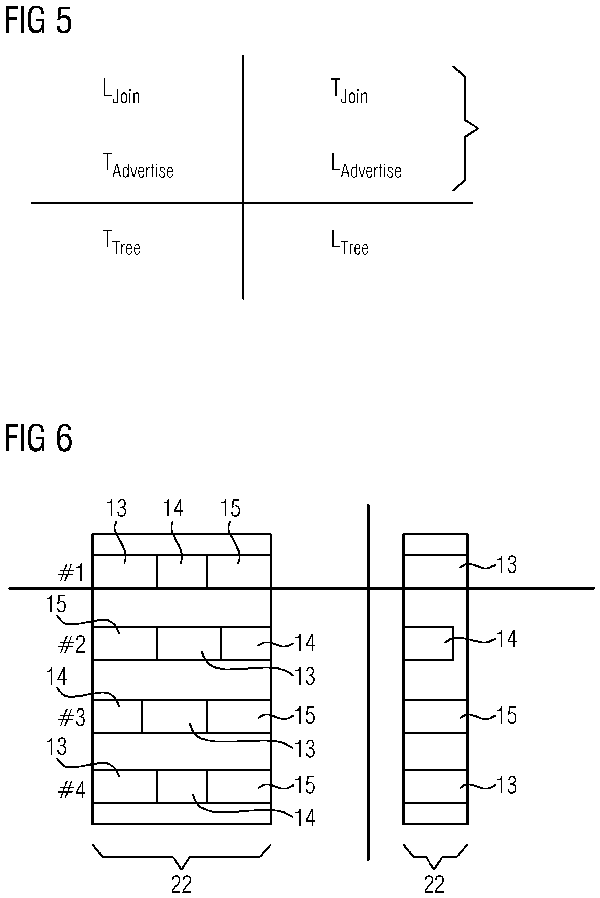

Eine Übersicht der neuen Datenobjekte Listener Advertise L_{Advertise}, Talker Join T_{Join} und dem aus dem Advertise resultierenden Listener Tree L_{Tree} kann der rechten Seite der FIG 5 entnommen werden, jeweils in Gegenüberstellung mit den korrespondierenden Datenobjekten vom vorbekannten Standard, also dem Talker Advertise T_{Advertise}, Listener Join L_{Join} und Talker Tree T_{Tree}, die in der linken Hälfte der FIG 5 gezeigt sind. Mit der Mengenklammer sind die beiden oberen, neuen Datenobjekte markiert.

In der FIG 4 ist der "merge" der Talker-Stati rein schematisch - und in zu FIG 3 korrespondierender Weise der "merge" der Listener-Stati - dargestellt. Man sieht auch hier eine Bridge 2, von der zwei Talker-seitige Ports 17 und ein Listener-seitiger Port 18 gezeigt sind. Weiterhin rein schematisch durch ein Blockbildelement dargestellt ist die "Talker status merge"-Funktion in Richtung des Listeners, also der SPS 1, die in der FIG mit 19 bezeichnet ist.

Wie auch aus der FIG 4 hervorgeht, erfolgt die Weiterleitung der Talker-Reservierungsstati und der Daten bei der erfindungsgemäßen Vorgehensweise in die gleiche Richtung, beides in Richtung des einen Empfängers, also der SPS 1.

Weiterhin in der FIG 4 rein schematisch angedeutet ist die Richtung der Frame-Weiterleitung, also des Datenflusses, dies mit Pfeilen 20 sowie die über die Talker-seitigen Ports 17 eingehenden und der über den Listener-seitigen Port 18 ausgehende, zusammengefasste (merged) Talker-Reservierungsstatus, jeweils mit Pfeilen 21. Über den dem Listener, also der SPS 1 am nächsten liegenden Bridge 2 werden alle Reservierungsstati sämtlicher Talker, also Sensoren 11, welche dem der SPS 1 mit dem Listener Advertise angekündigten Stream beigetreten sind (join) an die SPS 1, welche die logische Wurzel (root) des Baumes bildet, weitergeleitet. Der bei der SPS 1 ankommende zusammengefasste (merge) Reservierungsstatus umfasst dabei entweder die Information, dass eine Reservierung der senderseitigen Ports 17 aller Bridges 2 auf den die Sensoren 11 und die SPS 1 verbindenden Netzwerkpfaden erfolgreich war, oder dass eine Reservierung der senderseitigen Ports 17 aller Bridges 2 auf den die Sensoren 11 und die SPS 1 verbindenden Netzwerkpfaden nicht erfolgreich war, oder dass eine Reservierung wenigstens eines senderseitigen Ports 17 wenigstens einer Bridge 2 auf den die Sensoren 11 und die SPS 1 verbindenden Netzwerkpfaden nicht erfolgreich war und wenigstens eine Reservierung eines senderseitigen Ports 17 erfolgreich war.

Ist die Talker-Reservierung für alle betroffenen Knotenpunkte, also allen Bridges 2 auf dem Listener-Tree erfolgreich, kann der eigentliche Datentransfer beginnen, also die Weiterleitung der Frames 13, 14, 15, 16 mit von den Sensoren 11 erfassten Istwerten.

Die Weiterleitung der von verschiedenen Sensoren 11 über die beiden Talker-seitigen Ports 17 an der Bridge 2 ankommenden Frames 13, 14, 15, 16 über den einen Listener-seitigen Port 6, 7 kann auf unterschiedliche Weise erfolgen, beispielsweise gemäß dem akkumulierten Stream-Typ oder dem Multiplexed-Stream-Typ. Bei ersterem Typ können alle Sensoren 11 in einer Periode einen Frame 13 ,14,15, 16 senden, wobei dann die Summe aller Frames 13, 14, 15, 16 reserviert werden muss, also eine größere Bandbreite erforderlich ist. Bei dem Multiplexed Stream Typ ist die Koordination derart, dass in jeder Periode nur einer der Sensoren 11 einen Frames sendet, was mit einer geringeren Bandbreitenanforderung jedoch einer höheren Wartezeit verbunden ist, da es länger dauert, bis alle Sensoren 11 nacheinander ihre Daten gesendet haben. Der Stream-Typ ist Teil der Stream-Beschreibung, die die SPS 1 zusammen mit dem Listener-Advertise herausgeben hat.

Die FIG 6 zeigt rein schematisch das Prinzip des akkumulierten und des Multiplexed-Stream-Typs in Gegenüberstellung. Konkret ist auf der linken Seite der FIG 6 beispielhaft für Perioden #1 bis #4 und Frames 13, 14, 15 gezeigt, dass beim akkumulierten Stream-Typ die drei Frames 13, 14, 15 in jeder Periode übertragen werden, was mit einer höheren Bandbreite 22 einhergeht, und gemäß dem Multiplexed-Stream-Typ in jeder Periode jeweils nur eine Frame 13, 14, 15 weitergeleitet wird, wobei die Bandbreite 22 derjenigen des größten Frames 13 entspricht.

Auf Basis erhaltener Istwerte kann die SPS 1 insbesondere in an sich hinlänglich bekannter Weise Steuersignale ermitteln und/oder die Istwerte können zu Auswertungszwecken herangezogen werden. Die SPS 1 wirkt insbesondere u.a. auf Basis der erhaltenen Istwerte auf den industriellen technischen Prozess ein.

Die vorstehend beschriebene erfindungsgemäße Vorgehensweise bietet eine Vielzahl von erheblichen Vorteilen. Einerseits wird die Anzahl der Echtzeitflüsse, also Streams in einem Netzwerk reduziert. Es ist nicht mehr nötig, dass für jeden Sensor 11, von dem Daten an die SPS 1 zu übermitteln sind, ein separater Stream eingerichtet wird, sondern mehrere Sensoren 11 können Daten über nur einen Stream an einem gemeinsames Ziel senden. Damit geht eine Reduzierung des Control Overheads für die Registrierung und Reservierung der Echt-zeit-Streams und eine Reduzierung der Anzahl von Filterdatabase-Einträgen in den Kontenpunkten 2 einher und es wird der gleiche Overhead für beide Richtungen des für die Closed-Loop-Steuerung erforderlichen Datentransfers erzielt. Weiterhin wird die Skalierbarkeit verbessert, da mehr Endgeräte, insbesondere Sensoren/Aktoren 11, 3 unterstützt werden können. Die erfindungsgemäße Vorgehensweise ist weiterhin von der gegebenen Netzwerktopologie unabhängig. So ist sie keineswegs auf die gezeigte Linientopologie beschränkt, sondern kann gleichermaßen auch bei Vorliegen anderer Netzwerktopologien, etwa einer Ring- oder Sterntopologie, zum Einsatz kommen. Weiterhin wir die Kommunikationskonfiguration durch die erfindungsgemäße Vorgehensweise vereinfacht. Auch kann das Engineering von Kontrollanwendungen vereinfacht werden, insbesondere ist eine automatische Kommunikationskonfiguration ohne Engineering möglich und die Kontrollinformation für Feldbusanwendungen kann vereinfacht werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung wie in den Ansprüchen beschrieben zu verlassen.

## Patentansprüche

1. Verfahren zur Daten-Kommunikation in einem industriellen Netzwerk mit einem oder mehreren Knotenpunkten (2), für einen Datentransfer zwischen mehreren Daten bereitstellenden Sendern (11) und einem die von den mehreren Sendern (11) bereitgestellten Daten über einen Stream empfangenden Empfänger (1), bei dem für die Einrichtung des Streams von dem Empfänger (1) eine Listener Advertise Nachricht für den Stream herausgegeben wird, die eine Streambeschreibung umfasst, und die Listener Advertise Nachricht an mehrere Sender (11) des Netzwerkes übertragen wird, wobei von wenigstens einem Sender, welcher über den Stream Daten an den Empfänger übermitteln will, eine Talker Join Nachricht gesendet und für diesen eine Talker Join Reservierung an den Knotenpunkten auf dem Netzwerkpfad zwischen dem Sender und dem Empfänger durchgeführt wird.

2. Verfahren nach Anspruch 1, **dadurch gekennzeichnet, dass** die Listener Advertise Nachricht im Netzwerk verbreitet wird.

3. Verfahren nach Anspruch 1, **dadurch gekennzeichnet, dass** die jeweilige Talker Join Nachricht eine Stream-ID und/oder einen Reservierungsstatus umfasst.

4. Verfahren zur Daten-Kommunikation in einem Netzwerk mit einem oder mehreren Knotenpunkten (2), nach einem der vorhergehenden Ansprüche, bei dem ein Stream zwischen mehreren Sendern (11) und einem Empfänger (1) eingerichtet wird und/oder von mehreren Sendern (11) über einen Stream Daten an einen Empfänger (1) gesendet werden.

5. Verfahren nach einem der vorhergehenden Ansprüche, **dadurch gekennzeichnet, dass** an wenigstens einem Knotenpunkt (2)ein Reservierungsstatus eines ersten Portes (17) in Richtung eines oder mehrerer Sender (11) und ein Reservierungsstatus eines zweiten Portes (17) in Richtung eines oder mehrerer weiterer Sender (11) zusammengefasst werden.

6. Verfahren nach Anspruch 5, **dadurch gekennzeichnet, dass** der dem Empfänger (1) am nächsten liegende Knotenpunkt (2) einen für alle Sender (11) zusammengefassten Reservierungsstatus an den Empfänger (1) weiterleitet.

7. Verfahren nach einem der vorhergehenden Ansprüche, **dadurch gekennzeichnet, dass** für die Reservierung von Ressourcen an einem oder mehreren Knotenpunkten (2) wenigstens ein Reservierungsprotokoll verwendet wird.

8. Verfahren nach einem der vorhergehenden Ansprüche, **dadurch gekennzeichnet, dass** der Netzwerkbaum bestimmt wird, der durch Netzwerkpfade gebildet wird, die den Empfänger (1) jeweils mit denjenigen Sendern (11) verbinden, die über den Stream Daten an dem Empfänger (1) senden wollen.

9. Verfahren nach Anspruch 7 und 8, **dadurch gekennzeichnet, dass** der bestimmte Netzwerkbaum ein das Reservierungsprotokoll erweiterndes Datenobjekt darstellt.

10. Verfahren nach einem der vorhergehenden Ansprüche, **dadurch gekennzeichnet, dass** die Listener Advertise Nachricht eine Streambeschreibung umfasst, die eine Angabe des Stream-typs aufweist.

11. Steuerungsverfahren für einen industriellen technischen Prozess oder ein Fahrzeug, bei dem zwischen wenigstens zwei Komponenten eines Steuerungssystems Daten unter Durchführung des Verfahrens nach einem der vorhergehenden Ansprüche ausgetauscht werden und auf Basis der ausgetauschten Daten eine Steuerung des industriellen technischen Prozesses oder Fahrzeugs erfolgt.

12. Vorrichtung umfassend
- wenigstens einen Knotenpunkt, insbesondere Bridge (2), und/oder
- wenigstens eineinen Sender bildendes Endgerät, insbesondere Sensor (11), und/oder
- ein einen Empfänger bildendes Gerät,
wobei die Vorrichtung zur Durchführung des Verfahrens nach einem der vorhergehenden Ansprüche ausgebildet und eingerichtet ist.

13. Steuerungssystem für einen industriellen technischen Prozess umfassend eine Vorrichtung nach Anspruch 12.

14. Computerprogramm umfassend Programmcode-Mittel zur Durchführung des Verfahrens nach einem der Ansprüche 1 bis 11.

15. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 11 durchzuführen.

## Claims

1. Method for data communication in an industrial network with one or more nodal points (2) for data transfer between a plurality of data-providing transmitters (11) and a receiver (1) receiving the data provided by the plurality of transmitters (11) via a stream with which, to establish the stream, the receiver (1) issues a listener advertise message for the stream, which comprises a stream description, and the listener advertise message is transmitted to a plurality of transmitters (11) of the network, wherein at least one transmitter, which wishes to transmit data to the receiver via the stream, sends a talker join message and for this makes a talker join reservation at the nodal points on the network path between the transmitter and the receiver.

2. Method according to claim 1, **characterised in that** the listener advertise message is propagated in the network.

3. Method according to claim 1, **characterised in that** the respective talker join message comprises a stream ID and/or a reservation status.

4. Method for data communication in a network with one or more nodal points (2) according to one of the preceding claims with which a stream is established between a plurality of transmitters (11) and a receiver (1) and/or data is sent to a receiver (1) by a plurality of transmitters (11) via a stream.

5. Method according to one of the preceding claims, **characterised in that**, at at least one nodal point (2), a reservation status of a first port (17) in the direction of one or more transmitters (11) and a reservation status of a second port (17) in the direction of one or more further transmitters (11) are merged.

6. Method according to claim 5, **characterised in that** the nodal point (2) located closest to the receiver (1) routes a merged reservation status for all the transmitters (11) to the receiver (1).

7. Method according to one of the preceding claims, **characterised in that**, for the reservation of resources at one or more nodal points (2), at least one reservation protocol is used.

8. Method according to one of the preceding claims, **characterised in that** there is a determination of the network tree, which is formed by network paths connecting the receiver (1) in each case to the transmitters (11) which wish to send data to the receiver (1) via the stream.

9. Method according to claim 7 and 8, **characterised in that** the network tree determined represents a data object expanding the reservation protocol.

10. Method according to one of the preceding claims, **characterised in that** the listener advertise message comprises a stream description specifying the stream type.

11. Control method for an industrial technical process or a vehicle with which data is exchanged between at least two components of a control system, while carrying out the method according to one of the preceding claims and the industrial technical process or vehicle is controlled based on the exchanged data.

12. Apparatus comprising
- at least one nodal point, in particular bridge (2) and/or
- at least one terminal, in particular sensor (11), forming a transmitter and/or
- a device forming a receiver,
wherein the apparatus is embodied and configured to carry out the method according to one of the preceding claims.

13. Control system for an industrial technical process comprising an apparatus according to claim 12.

14. Computer program comprising program code means for carrying out the method according to one of claims 1 to 11.

15. Computer-readable medium comprising instructions, which, when executed on at least one computer, prompt the at least one computer to carry out the steps of the method according to one of claims 1 to 11.

## Revendications

1. Procédé de communication de données dans un réseau industriel ayant un ou plusieurs points (2) nodaux, pour un transfert de données entre plusieurs émetteurs (11) mettant à disposition des données et un récepteur (1) recevant par l'intermédiaire d'un stream les données mises à disposition par les plusieurs émetteurs (11), dans lequel pour le dispositif du stream, on émet par le récepteur (1) un message Listener Advertise pour le stream, qui comprend une description du stream et on transmet le message Listener Advertise à plusieurs émetteurs (11) du réseau, dans lequel on envoie par au moins un émetteur, qui veut transmettre par le stream des données au récepteur, un message Talker Join et on effectue pour celui-ci une réservation Talker Join aux points nodaux sur le trajet du réseau entre l'émetteur et le récepteur.

2. Procédé suivant la revendication 1, **caractérisé en ce que** l'on diffuse le message Listener Advertise dans le réseau.

3. Procédé suivant la revendication 1, **caractérisé en ce que** le message Talker Join respectif comprend une ID de stream et/ou un état de réservation.

4. Procédé de communication de données dans un réseau ayant un ou plusieurs points (2) nodaux, suivant l'une des revendications précédentes, dans lequel on établit un stream entre plusieurs émetteurs (11) et un récepteur (1) et/ou on envoie de plusieurs émetteurs (11) par l'intermédiaire d'un stream des données à un récepteur (1).

5. Procédé suivant l'une des revendications précédentes, **caractérisé en ce que** l'on rassemble en au moins un point (2) nodal un état de réservation d'un premier accès (17) en direction d'un ou de plusieurs émetteurs (11) et un état de réservation d'un deuxième accès (17) en direction d'un ou de plusieurs autres émetteurs (11).

6. Procédé suivant la revendication 5, **caractérisé en ce que** le point (2) nodal le plus près du récepteur (1) achemine au récepteur (1) un état de réservation réuni pour tous les émetteurs (11).

7. Procédé suivant l'une des revendications précédentes, **caractérisé en ce que** on utilise au moins un programme de réservation pour la réservation de ressource sur l'un ou sur plusieurs points (2) nodaux.

8. Procédé suivant l'une des revendications précédentes, **caractérisé en ce que** l'on détermine l'arbre de réseau formé par des trajets de réseau, qui relient le récepteur (1) respectivement aux émetteurs (11) qui veulent envoyer au récepteur (1) des données par l'intermédiaire du stream.

9. Procédé suivant les revendications 7 et 8, **caractérisé en ce que** l'arbre de réseau déterminé représente un objet de données étendant le programme de réservation.

10. Procédé suivant l'une des revendications précédentes, **caractérisé en ce que** le message Listener Advertise comprend une description de stream, qui donne une indication sur le type du stream.

11. Procédé de commande d'un processus technique industriel ou d'un véhicule, dans lequel on échange entre au moins deux composants d'un système de commande des données en effectuant le procédé suivant l'une des revendications précédentes et, sur la base des données échangées, il se produit une commande du processus technique industriel du véhicule.

12. Installation comprenant
- au moins un point nodal, notamment un bridge (2), et/ou
- au moins un terminal formant un émetteur, notamment un capteur (11), et/ou
- un appareil formant un récepteur,
dans laquelle l'installation est constituée et conçue pour effectuer le procédé suivant l'une des revendications précédentes.

13. Système de commande d'un processus technique industriel comprenant une installation suivant la revendication 12.

14. Programme d'ordinateur comprenant des moyens de code de programme pour effectuer le procédé suivant l'une des revendications 1 à 11.

15. Support déchiffrable par ordinateur, qui comprend des instructions qui, lorsqu'elles sont exécutées sur au moins un ordinateur, font que le au moins un ordinateur effectue les stades du procédé suivant l'une des revendications 1 à 11.
